# FASCICULE DE BREVET EUROPEEN

(11) **EP 2 329 990 B1**
(45) Date de publication et mention de la délivrance du brevet: **07.12.2011**
(21) Numéro de dépôt: 10167574.2
(22) Date de dépôt: 28.06.2010
(51) Int. Cl.: B60R 1/02

(54) **Appareil audio/vidéo intégrable pour véhicule automobile, notamment autoradio, à ergonomie et extraction optimisées.**
Integrierbares Audio-/Videogerät für Kraftfahrzeug, insbesondere Autoradio mit optimierter Ergonomie und Möglichkeit zum Herausziehen
Audio/video device suitable for building into an automobile, in particular a car radio, with optimised ergonomics and extraction.

(30) Priorité: 02.12.2009 FR 0958577
(43) Date de publication de la demande: 08.06.2011
(73) Titulaire: Parrot, 75010 Paris (FR)
(72) Inventeur: Vignau-Lous, Bertrand, 75018, PARIS (FR); Belkhoudja, Hocine, 75014, Paris (FR)
(74) Mandataire: Dupuis-Latour, Dominique

(56) Documents cités:
- DE-A1- 3 415 846
- US-A- 4 679 026
- US-A- 4 881 295
- US-A- 5 381 684
- US-A- 5 779 197

## Description

L'invention concerne le montage des appareils électroniques audio/vidéo, tels que les autoradios, à bord des véhicules automobiles.

On notera que l'application aux autoradios, dans le cadre de laquelle sera décrite l'invention, si elle est particulièrement avantageuse, n'est pas limitative de l'invention qui, comme on le comprendra, peut être appliquée à de très nombreux types d'autres appareils électroniques.

Le logement est en général de dimensions normalisées "1 DIN" (en référence à la norme DIN 75490/ISO 7736), correspondant à une dimension d'ouverture de 180 x 50 mm.

Pour le montage de l'autoradio, la technique consiste à placer un fourreau de montage, généralement métallique, encliqueté ou fixé de toute manière appropriée à l'intérieur de l'ouverture prévue à cet effet dans la planche de bord (ou de la console centrale ou tout autre emplacement approprié). Ce fourreau métallique, généralement laissé à demeure dans l'ouverture, servira de support intérieur et de guide pour l'insertion de l'autoradio dans le tableau de bord.

Une fois le fourreau installé, l'autoradio est inséré et encliqueté dans celui-ci. Cet encliquetage est réalisé au moyen de languettes élastiques anti-retour de telle sorte que, une fois mis en place, le boîtier de l'autoradio ne peut être retiré de son emplacement sans utilisation d'un outil de démontage approprié.

Cet outil de démontage est généralement constitué de clés en forme de U dont les deux branches se présentent sous forme d'aiguilles introduites dans des orifices prévus dans la face avant du boîtier de l'autoradio afin de désolidariser le boîtier de l'autoradio d'avec le fourreau métallique : l'insertion des aiguilles vient appuyer sur les languettes élastiques, ce qui permet de repousser celles-ci et libère le boîtier qui peut être alors librement extrait du fourreau.

Ce système de montage nécessite de prévoir des orifices pour l'insertion de l'outil de démontage, orifices qui sont habituellement au nombre de deux ou quatre, disposés symétriquement à chaque bord latéral de la façade du boîtier de l'autoradio.

Ce système de montage est par exemple illustré par le US 4 679 026 A (Blaupunkt-Werke GmbH), qui décrit un autoradio comportant de chaque côté droit et gauche un système de fixation à languettes flexibles, avec en façade deux paires d'orifices latéraux permettant d'introduire une clé en forme de U pour repousser ces languettes et désolidariser le boîtier du fourreau.

La présence de ces orifices est nécessaire pour pouvoir démonter et extraire l'autoradio du fourreau métallique auquel il est fixé.

Les orifices en façade, très courants pour les modèles les plus anciens ou ceux installés en première monte dans le véhicule, sont toutefois relativement inesthétiques.

Pour d'autres appareils, il est prévu une pièce d'habillage en plastique rapportée après montage, et clipsée sur le fourreau, venant chevaucher le bord périphérique de l'autoradio pour dissimuler les orifices ; cette solution présente toutefois le double inconvénient de nécessiter une pièce supplémentaire, et d'être relativement inesthétique dans la mesure où elle laisse apparaître un cadre surajouté, non fonctionnel, relativement large. Enfin, sur le plan de l'ergonomie, en tout état de cause la présence des orifices implique l'occupation d'une surface non négligeable de part et d'autre de la face avant du boîtier, surface qui ne peut pas être utilisée à d'autres fins.

En particulier, si l'on souhaite installer sur l'autoradio un afficheur relativement grand, s'étendant jusqu'aux bords extrêmes du boîtier, le déport latéral de cet afficheur empêche l'intégration dans le boîtier des orifices nécessaires au démontage. Et dans le cas d'un cache plastique dissimulant les orifices, la présence de cette pièce empêche, de la même façon, de prévoir un afficheur s'étendant jusqu'aux bords de l'autoradio.

Une solution possible consiste à prévoir une façade démontable, montée de manière amovible sur le boîtier.

Un exemple d'autoradio à façade amovible est par exemple décrit dans le FR 2 920 945 A1 (Parrot S.A.). Cette façade amovible, qui porte divers boutons de commande de l'autoradio, fait office d'élément antivol ; elle peut également permettre de découvrir une fente d'insertion d'un disque compact ou, comme dans la demande précitée, une trappe dans laquelle peut être placé un téléphone portable ou un baladeur couplé à l'autoradio. Dans ce cas, les orifices de montage sont dissimulés par la façade démontable.

L'inconvénient de ces façades démontables est leur taille relativement importante, qui empêche de les glisser simplement au fond d'une poche par exemple.

L'un des buts de l'invention est de proposer un autoradio et son ensemble de montage qui permettent de résoudre les divers problèmes ci-dessus, avec notamment :
- élimination des orifices de démontage situés aux extrémités du boîtier de l'autoradio ;
- possibilité d'intégrer un afficheur de grandes dimensions, s'étendant notamment de bord à bord sur trois côtés de l'autoradio, donc avec une surface utile maximale ;
- absence totale d'orifices de montage apparents lorsque l'autoradio est en place ;
- absence de recours à une pièce d'habillage additionnelle telle que cache ou enjoliveur, d'où simplification du montage, abaissement des coûts et maximisation de la surface visuellement disponible ;
- possibilité d'éviter le recours à une façade amovible de grandes dimensions.

Pour cela, la présente invention propose un ensemble destiné à être intégré dans un logement de la planche de bord de véhicule automobile, comprenant, comme divulgué par le US 4 679 026 A (l'état de la technique le plus proche) précité :
- un appareil électronique audio/vidéo, notamment un autoradio, cet appareil comportant un boîtier logeant un premier ensemble de circuits électroniques et une façade montée de manière amovible sur le boîtier, cette façade logeant un second ensemble de circuits électroniques reliés à une pluralité d'organes de commande apparents sur la façade ;
- un fourreau de montage, comprenant des moyens de solidarisation au logement de la planche de bord et apte à recevoir le boîtier de l'appareil électronique en ne laissant affleurer du logement qu'une face frontale, apparente, de ce dernier ;
- des moyens de solidarisation mécanique du boîtier dans le fourreau, comportant des moyens à languette élastique anti-retour aptes à verrouiller de manière réversible le boîtier dans le fourreau après enfoncement complet du boîtier dans ce dernier ; et
- des moyens de déverrouillage du boîtier, comportant un outil apte à être introduit dans au moins deux orifices ménagés dans la face frontale du boîtier pour venir en contact avec la languette élastique anti-retour jusqu'à repousser celle-ci dans une configuration de désolidarisation du boîtier d'avec le fourreau.

De façon caractéristique de l'invention:
- les deux orifices de la face frontale du boîtier sont ménagés dans une zone centrale du boîtier dans le sens de la largeur, et au voisinage des bords périphériques supérieur et inférieur du boîtier dans le sens de la hauteur ;
- ces deux orifices sont ménagés dans une zone dissimulée par la façade lorsque celle-ci est montée sur le boîtier, et laissée apparente lorsque la façade est séparée du boîtier ;
- l'outil est un outil d'extraction en forme d'étrier comportant deux branches plates parallèles aptes à être introduites dans les deux orifices respectifs ;
- la largeur et la longueur de la face frontale du boîtier sont supérieures aux dimensions homologues du fourreau, de manière que le bord périphérique du boîtier recouvre et occulte le bord libre du fourreau ; et
- l'ensemble est essentiellement dépourvu de pièce d'habillage périphérique rapportée à l'interface entre le boîtier et le bord libre du fourreau.

Selon diverses caractéristiques subsidiaires avantageuses :
- la façade amovible est une demi-façade, s'étendant en largeur essentiellement sur une moitié de la face frontale du boîtier y compris l'emplacement des deux orifices de cette face frontale ;
- la partie de la face frontale du boîtier non recouverte par la demi-façade amovible comprend un afficheur, qui s'étend notamment d'un bord à l'autre de la face frontale du boîtier non recouverte par la demi-façade amovible ;
- il est prévu des moyens à languette élastique anti-retour aptes à verrouiller au boîtier, de manière réversible, les branches de l'étrier après insertion complète de celles-ci dans les deux orifices du boîtier ;
- le boîtier comprend des moyens élastiques de déverrouillage, aptes à placer la languette anti-retour dans une configuration de désolidarisation du boîtier d'avec les branches de l'étrier.

On va maintenant décrire un exemple de mise en oeuvre du dispositif de l'invention, en référence aux dessins annexés où les mêmes références numériques désignent d'une figure à l'autre des éléments identiques ou fonctionnellement semblables.
La Figure 1 est une vue perspective de l'autoradio selon l'invention, assemblé dans le fourreau métallique de montage et telle qu'il apparaît dans une configuration d'utilisation.
La Figure 2 est une vue perspective éclatée de l'autoradio selon l'invention dans une configuration de montage, avec son fourreau métallique et son outil d'extraction associé.
La Figure 3 est une vue agrandie du détail repéré III sur la Figure 2.
La Figure 4 montre l'autoradio de la Figure 4 accouplé à l'outil d'extraction, dans une configuration où l'autoradio vient d'être extrait de son fourreau.
La Figure 5 est une coupe par un plan sagittal de l'autoradio, du fourreau métallique et de l'outil d'extraction.
La Figure 6 est une vue agrandie du détail repéré VI sur la Figure 5.

L'autoradio selon l'invention se présente extérieurement sous la forme d'un ensemble de dimensions normalisées, intégrable dans la planche de bord d'un véhicule automobile.

L'autoradio proprement dit comprend un boîtier 100 intégrant un certain nombre de circuits électroniques, avec une façade 200 qui, dans l'exemple illustré, est une demi-façade amovible s'étendant dans le sens horizontal sur un peu plus de la moitié de la longueur de l'autoradio.

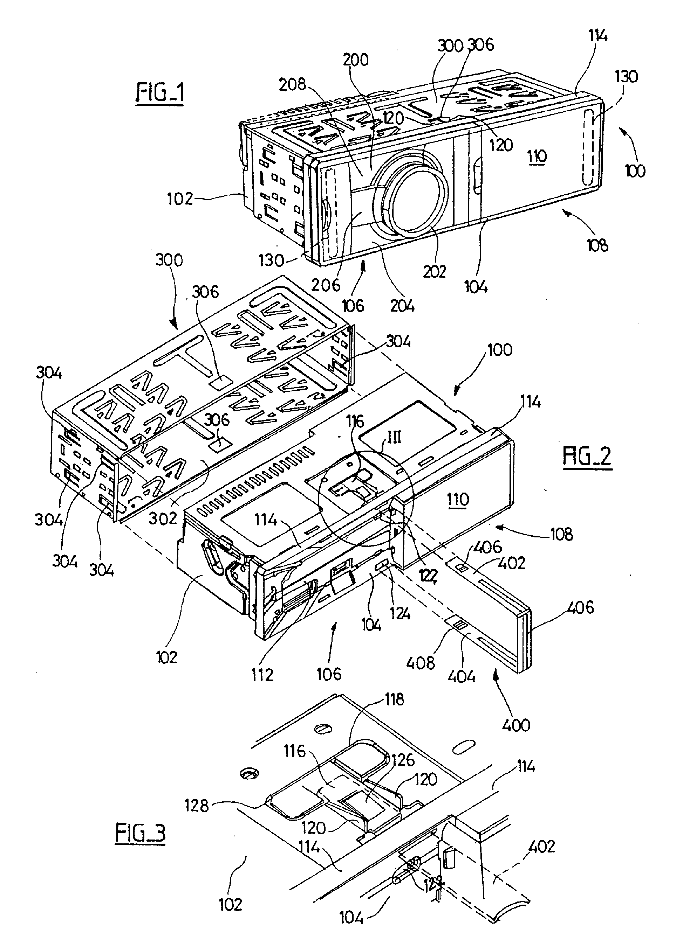

La Figure 1 illustre l'autoradio avec la façade 200 montée sur le boîtier, donc en position fonctionnelle permettant son utilisation, tandis que la Figure 2 illustre le boîtier 100 avec la demi-façade 200 retirée.

La demi-façade amovible 200 comprend un bouton rotatif 202 et diverses touches de commande 204, 206, 208, ... La demi-façade amovible 200 peut ainsi regrouper la totalité ou la quasi-totalité des commandes de l'autoradio, ainsi que divers circuits électroniques. Cette demi-façade amovible 200 se présente sous forme d'un élément parallélépipédique aplati dont la face avant porte les divers organes de commande 202, 204, 206, 208,... et dont la face arrière porte un connecteur (non représenté) de couplage au circuit du boîtier 100.

Le boîtier 100 comprend un corps 102 renfermant les divers circuits électroniques de l'autoradio. Ce boîtier est destiné à être intégré dans le tableau de bord du véhicule, en ne laissant affleurer qu'une face frontale 104 tournée vers l'utilisateur. La face frontale 104 présente, en direction horizontale, deux moitiés 106 et 108, la moitié 106 recevant la demi-façade amovible 200 et la moitié 108 étant une partie de façade fixe, avec par exemple un écran de visualisation 110 s'étendant, en hauteur, d'un bord à l'autre de la face frontale 104 et, latéralement, jusqu'au bord droit extrême de cette même face frontale. Cet écran est avantageusement un écran de grandes dimensions, par exemple un écran de diagonale 3,2 pouces (8,13 cm) occupant donc presque la moitié de la largeur de la face frontale 104 pour un boîtier 100 de format normalisé "1 DIN", c'est-à-dire 180 x 50 mm.

La moitié gauche 106 de la face frontale 104 fait fonction de réceptacle 112 pour la demi-façade amovible 200, dont on a indiqué plus haut que, dans le sens horizontal, elle occupait un peu plus que la moitié de l'étendue apparente de la face frontale 104.

Le boîtier 100 est destiné à être intégré dans la planche de bord ou dans une console du véhicule automobile, au moyen d'un fourreau de montage 300, par exemple un fourreau métallique, fixé à l'intérieur du logement où doit être monté l'autoradio.

Le fourreau 300 est par exemple un élément métallique fermé sur quatre côtés, présentant en face avant une ouverture 302 dont les dimensions lui permettent de recevoir, de façon ajustée, le boîtier 100. Le fourreau 300 comprend également des pattes élastiques 304 permettant, une fois le fourreau introduit dans le logement du tableau de bord, de solidariser ce fourreau au logement, le fourreau étant destiné à rester à l'intérieur de ce dernier.

Pour le montage de l'autoradio, le boîtier 100 est glissé dans le fourreau 300 préalablement fixé dans le logement du tableau de bord. Une fois complètement introduit, seule dépasse du boîtier la face frontale 104, le bord périphérique 114 légèrement débordant venant cacher l'interstice entre le boîtier, le fourreau et la planche de bord.

La solidarisation du boîtier 100 au fourreau 300, et donc à la planche de bord du véhicule, est réalisée au moyen d'une languette élastique anti-retour 116 venant s'encliqueter dans une ouverture homologue 306 du fourreau 300.

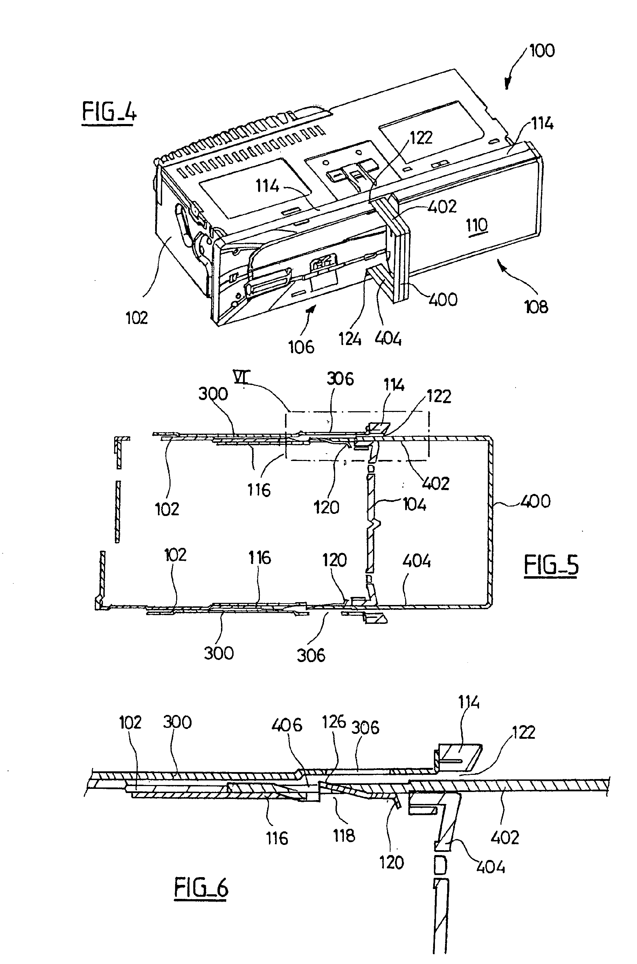

De façon caractéristique de l'invention, la languette élastique anti-retour 116 est disposée approximativement au milieu du boîtier, en direction horizontale, et il est prévu deux de ces languettes, une en partie supérieure et l'autre en partie inférieure du boîtier. On pourra notamment se référer à la coupe de la Figure 5, qui est prise dans un plan sagittal (plan vertical d'avant en arrière, perpendiculaire au plan vu de face).

Plus précisément, comme illustré sur les vues de détail des Figures 3 et 6, la languette élastique 116, qui est escamotable dans un orifice 118 du boîtier pendant l'insertion, est repliée en partie supérieure pour former deux ergots 120 dont les dimensions et la position correspondent à l'ouverture 306 correspondante du fourreau 300. La languette élastique 116 présente une longueur suffisante (voir Figure 6) pour permettre lors de l'insertion du boîtier son escamotage dans l'ouverture 118, puis, par effet de cliquet, son retour à la position initiale lorsque l'ouverture 306 est atteinte, les ergots 120 venant verrouiller l'ensemble en position.

Lorsqu'un utilisateur souhaite extraire le boîtier 100 du fourreau 300, il utilise à cet effet un outil 400 en forme d'étrier, avec deux branches plates parallèles 402, 404 réunies par un élément central 406 formant poignée. Les deux branches 402, 404 sont introduites dans des ouvertures 122, 124 en vis-à-vis, ce qui permet de ménager un accès vers la languette élastique 116, jusqu'à repousser celle-ci vers le bas et dégager ainsi les ergots 120 de l'orifice 306. Cette configuration est celle illustrée sur les Figures 5 et 6.

Pour pouvoir exercer une traction sur le boîtier 100 sans être obligé de tirer sur la face frontale 104, l'étrier d'extraction est avantageusement muni, sur chaque branche 402, 404, d'ouvertures respectives 406, 408 permettant d'accrocher un ergot 126 formé dans la languette élastique 116 (voir

Figures 3 et 6). L'utilisateur pourra alors tirer sur l'élément central 406 qui jouera le rôle d'une poignée, afin d'extraire l'ensemble boîtier-outil, ensemble monobloc correspondant à ce qui est illustré Figure 4.

Pour détacher plus aisément l'outil d'extraction 400 une fois le boîtier retiré, la languette élastique 116 comporte avantageusement une ailette 128 sur laquelle il suffira d'appuyer d'un doigt pour faire fléchir la languette et ainsi dégager l'ergot 126 de l'ouverture correspondante 406 de l'outil.

L'ensemble que l'on vient de décrire procure de multiples avantages.

En premier lieu, du point de vue de l'ergonomie, l'utilisation d'une demi-façade permet de déporter latéralement l'écran et prévoir pour celui-ci un modèle de grandes dimensions.

Le placement des ouvertures 122, 124 de déverrouillage en partie centrale du boîtier permet de libérer totalement les régions latérales droite et gauche 130 (Figure 1) qui, dans un dispositif conventionnel, sont occupées par les orifices d'insertion des clés de démontage. L'utilisation de la surface frontale de l'autoradio est ainsi maximale et n'est limitée par aucune contrainte liée au mécanisme de démontage et d'extraction.

En second lieu, du point de vue esthétique, les orifices d'introduction de l'outil de démontage, situés en partie centrale, sont occultés par la demi-façade 200 lorsque celle-ci est montée sur le boîtier. Il est ainsi possible de s'affranchir de tout élément disgracieux en façade, et également de toute pièce supplémentaire telle que cache ou enjoliveur, qui serait à la fois inutile et empiéterait sur la surface utile de la face frontale de l'autoradio.

Enfin, en ce qui concerne la commodité du démontage de l'autoradio de la planche de bord du véhicule, on notera que l'utilisation d'un unique outil d'extraction en forme de U, en partie centrale, permet d'extraire l'autoradio d'un geste simple (la position centrale étant équilibrée) et avec l'usage d'une seule main (du fait de l'utilisation d'un unique outil). Cela évite les positions inconfortables induites par l'utilisation des deux mains avec les dispositifs traditionnels, notamment dans le cas d'un montage dans des endroits difficiles, de la gêne occasionnée par la position des fauteuils par rapport à la planche de bord, etc.

En effet, l'extraction se réduit à la manipulation suivante :
- retrait de la façade amovible, pour libérer l'accès aux orifices 122, 124 d'insertion de l'outil ;
- insertion de l'outil d'extraction 400 ;
- extraction de l'ensemble monobloc boîtier-outil, par traction sur la partie centrale 406 de l'outil, qui fait fonction de poignée ; et
- dégagement de l'outil par appui d'un doigt sur les ailettes 128.

## Revendications

1. Un ensemble destiné à être intégré dans un logement de la planche de bord de véhicule automobile, comprenant :
- un appareil électronique audio/vidéo, notamment un autoradio (100, 200), cet appareil comportant :
· un boîtier (100) logeant un premier ensemble de circuits électroniques ; et
· une façade (200) montée de manière amovible sur le boîtier, cette façade logeant un second ensemble de circuits électroniques reliés à une pluralité d'organes de commande (202, 204, 206, 208) apparents sur la façade ;
- un fourreau de montage (300), comprenant des moyens (304) de solidarisation au logement de la planche de bord et apte à recevoir le boîtier (100) de l'appareil électronique en ne laissant affleurer du logement qu'une face frontale (104), apparente, de ce dernier ;
- des moyens de solidarisation mécanique du boîtier dans le fourreau, comportant des moyens (116, 120, 306) à languette élastique anti-retour (116) aptes à verrouiller de manière réversible le boîtier (100) dans le fourreau (300) après enfoncement complet du boîtier dans ce dernier ; et
- des moyens de déverrouillage du boîtier, comportant un outil (400) apte à être introduit dans au moins deux orifices (122, 124) ménagés dans la face frontale (104) du boîtier pour venir en contact avec la languette élastique anti-retour (116) jusqu'à repousser celle-ci dans une configuration de désolidarisation du boîtier d'avec le fourreau,
**caractérisé en ce que** :
- lesdits deux orifices (122, 124) de la face frontale du boîtier sont ménagés dans une zone centrale du boîtier dans le sens de la largeur, et au voisinage des bords périphériques (114) supérieur et inférieur du boîtier dans le sens de la hauteur ;
- ces deux orifices sont ménagés dans une zone dissimulée par la façade (200) lorsque celle-ci est montée sur le boîtier, et laissée apparente lorsque la façade est séparée du boîtier;
- ledit outil (400) est un outil d'extraction en forme d'étrier comportant deux branches plates parallèles (402, 404) aptes à être introduites dans lesdits deux orifices (122, 124) respectifs ;
- la largeur et la longueur de la face frontale (104) du boîtier (100) sont supérieures aux dimensions homologues du fourreau (300), de manière que le bord périphérique (114) du boîtier recouvre et occulte le bord libre du fourreau ; et
- l'ensemble est essentiellement dépourvu de pièce d'habillage périphérique rapportée à l'interface entre le boîtier et le bord libre du fourreau.

2. L'ensemble de la revendication 1, dans lequel la façade amovible (200) est une demi-façade, s'étendant en largeur essentiellement sur une moitié de la face frontale (104) du boîtier y compris l'emplacement desdits deux orifices (122, 124) de cette face frontale.

3. L'ensemble de la revendication 2, dans lequel la partie de la face frontale (104) du boîtier non recouverte par la demi-façade amovible comprend un afficheur (110).

4. L'ensemble de la revendication 3, dans lequel l'afficheur (110) s'étend d'un bord à l'autre de ladite face frontale du boîtier non recouverte par la demi-façade amovible.

5. L'ensemble de la revendication 1, comprenant des moyens (118, 126, 406) à languette élastique anti-retour (126) aptes à verrouiller au boîtier, de manière réversible, les branches (402, 404) de l'étrier (400) après insertion complète de celles-ci dans lesdits deux orifices (122, 124) du boîtier.

6. L'ensemble de la revendication 5, dans lequel le boîtier comprend des moyens élastiques de déverrouillage (116, 118, 128), aptes à placer ladite languette anti-retour (126) dans une configuration de désolidarisation du boîtier d'avec les branches de l'étrier.

## Claims

1. Assembly intended to be incorporated into a housing in the dashboard of a motor vehicle, comprising:
- an electronic audio/video appliance, in particular a car radio (100, 200), this appliance having:
• a casing (100) that houses a first set of electronic circuits; and
• a faceplate (200) mounted in a removable manner on the casing, this faceplate housing a second set of electronic circuits connected to a plurality of control members (202, 204, 206, 208) that can be seen on the faceplate;
- a mounting sleeve (300), comprising means (304) for securing to the housing in the dashboard and able to receive the casing (100) of the electronic appliance, with only a visible front face (104) of said electronic appliance being left flush with the housing;
- means for mechanically securing the casing in the sleeve, comprising means (116, 120, 306) having an elastic non-return tab (116), said means being able to reversibly lock the casing (100) in the sleeve (300) once the casing has been fully inserted into said sleeve; and
- means for unlocking the casing, comprising a tool (400) which is able to be introduced into at least two orifices (122, 124) formed in the front face (104) of the casing in order to come into contact with the elastic non-return tab (116) until the latter is pushed back into a configuration which releases the casing from the sleeve,
**characterized in that**
- said two orifices (122, 124) in the front face of the casing are formed in a central region of the casing in the widthwise direction, and close to the upper and lower peripheral edges (114) of the casing in the heightwise direction;
- these two orifices are formed in a region which is concealed by the faceplate (200) when the latter is mounted on the casing, and which remains visible when the faceplate is separated from the casing;
- said tool (400) is an extraction tool in the form of a clip having two flat parallel arms (402, 404) that can be introduced respectively into said two orifices (122, 124);
- the width and the length of the front face (104) of the casing (100) are greater than the homologous dimensions of the sleeve (300), such that the peripheral edge (114) of the casing covers and hides the free edge of the sleeve; and
- the assembly has essentially no peripheral trim piece connected to the interface between the casing the free edge of the sleeve.

2. Assembly according to Claim 1, in which the removable faceplate (200) is a half faceplate which extends in the widthwise direction approximately over half of the front face (104) of the casing, including the location of said two orifices (122, 124) in this front face.

3. Assembly according to Claim 2, in which that part of the front face (104) of the casing which is not covered by the removable half faceplate comprises a display (110).

4. Assembly according to Claim 3, in which the display (110) extends from one edge to the other of said front face of the casing, which front face is not covered by the removable half faceplate.

5. Assembly according to Claim 1, comprising means (118, 126, 406) having an elastic non-return tab (126), said means being able to reversibly lock the arms (402, 404) of the clip (400) to the casing once said arms have been inserted fully into said two orifices (122, 124) in the casing.

6. Assembly according to Claim 5, in which the casing comprises elastic unlocking means (116, 118, 128) that are able to place said non-return tab (126) in a configuration releasing the casing from the arms of the clip.

## Patentansprüche

1. Einheit, die dazu bestimmt ist, in eine Aufnahme des Armaturenbretts eines Kraftfahrzeugs integriert zu werden, die Folgendes enthält:
- ein elektronisches Audio-/Videogerät, insbesondere ein Autoradio (100, 200), wobei dieses Gerät Folgendes aufweist:
· ein Gehäuse (100), das eine erste Einheit von elektronischen Schaltungen aufnimmt; und
· eine Fassade (200), die abnehmbar auf das Gehäuse montiert wird, wobei diese Fassade eine zweite Einheit von elektronischen Schaltungen aufnimmt, die mit einer Vielzahl von an der Fassade sichtbaren Steuerorganen (202, 204, 206, 208) verbunden sind;
- eine Montagehülse (300), die Einrichtungen (304) zur festen Verbindung mit der Aufnahme des Armaturenbretts enthält und das Gehäuse (100) des elektronischen Geräts aufnehmen kann, indem sie aus der Aufnahme nur eine sichtbare Stirnseite (104) dieses Gehäuses bündig anliegend zutage treten lässt;
- Einrichtungen zur mechanischen Befestigung des Gehäuses in der Hülse, die Einrichtungen (116, 120, 306) mit elastischer Rückschlagzunge (116) enthalten, die das Gehäuse (100) nach vollständigem Eindrücken des Gehäuses in die Hülse umkehrbar in der Hülse (300) verriegeln können; und
- Einrichtungen zum Entriegeln des Gehäuses, die ein Werkzeug (400) aufweisen, das in mindestens zwei Öffnungen (122, 124) eingeführt werden kann, die in der Stirnseite (104) des Gehäuses ausgespart sind, um mit der elastischen Rückschlagzunge (116) in Kontakt zu kommen, bis diese in eine Konfiguration des Lösens der Verbindung des Gehäuses mit der Hülse zurückgedrückt wird,
**dadurch gekennzeichnet, dass**:
- die zwei Öffnungen (122, 124) der Stirnseite des Gehäuses in einer mittleren Zone des Gehäuses in Breitenrichtung und in der Nähe der oberen und unteren Umfangsränder (114) des Gehäuses in Höhenrichtung ausgespart sind;
- diese zwei Öffnungen in einer Zone ausgespart sind, die von der Fassade (200) verdeckt wird, wenn diese auf das Gehäuse montiert ist, und sichtbar gelassen wird, wenn die Fassade vom Gehäuse getrennt wird;
- wobei das Werkzeug (400) ein Herausziehwerkzeug in Form eines Bügels ist, der zwei flache parallele Schenkel (402, 404) aufweist, die in die zwei Öffnungen (122, 124) eingeführt werden können;
- die Breite und die Länge der Stirnseite (104) des Gehäuses (100) größer als die entsprechenden Abmessungen der Hülse (300) sind, so dass der Umfangsrand (114) des Gehäuses den freien Rand der Hülse bedeckt und verbirgt; und
- die Einheit im Wesentlichen kein Umfangs-Verkleidungsbauteil aufweist, das an die Schnittstelle zwischen dem Gehäuse und dem freien Rand der Hülse angebaut ist.

2. Einheit nach Anspruch 1, bei der die abnehmbare Fassade (200) eine Halbfassade ist, die sich in der Breite im Wesentlichen über eine Hälfte der Stirnseite (104) des Gehäuses erstreckt, einschließlich der Einbaustelle der zwei Öffnungen (122, 124) dieser Stirnseite.

3. Einheit nach Anspruch 2, bei der der Bereich der Stirnseite (104) des Gehäuses, der nicht von der abnehmbaren Halbfassade bedeckt ist, ein Display (110) enthält.

4. Einheit nach Anspruch 3, bei der sich das Display (110) von einem Rand der nicht von der abnehmbaren Halbfassade bedeckten Stirnseite des Gehäuses zum anderen erstreckt.

5. Einheit nach Anspruch 1, die Einrichtungen (118, 126, 406) mit elastischer Rückschlagzunge (126) enthält, die die Schenkel (402, 404) des Bügels (400) nach deren vollständiger Einführung in die zwei Öffnungen (122, 124) des Gehäuses umkehrbar am Gehäuse verriegeln können.

6. Einheit nach Anspruch 5, bei der das Gehäuse elastische Entriegelungseinrichtungen (116, 118, 128) enthält, die die Rückschlagzunge (126) in eine Konfiguration des Lösens der festen Verbindung des Gehäuses mit den Schenkeln des Bügels bringen können.
